# EUROPÄISCHE PATENTANMELDUNG

(11) **EP 4 329 291 A1**
(43) Veröffentlichungstag der Anmeldung: **28.02.2024**
(21) Anmeldenummer: 23192308.7
(22) Anmeldetag: 21.08.2023
(51) Int. Cl.: H04N 7/14

(54) **SYSTEM, VERFAHREN, COMPUTERPROGRAMM UND COMPUTERLESBARES MEDIUM**

(30) Priorität: 26.08.2022 DE 102022121634
(71) Anmelder: Telefónica Germany GmbH & Co. OHG, 80992 München (DE)
(72) Erfinder: Leth-Espensen, Mads, 82110 Germering (DE); Müllner, Robert, 81479 München (DE); Widder, Wolfgang, 82362 Weilheim (DE)
(74) Vertreter: Herrmann, Uwe

(57) **Zusammenfassung**

Die vorliegende Erfindung betrifft ein System zur Erfassung und Darstellung mindestens eines Teils eines Gesichts einer Person, wobei das System ein Aufnahmemittel, vorzugsweise mit einem optischen Zentrum, Korrekturmittel und ein Anzeigemittel umfasst, wobei das Aufnahmemittel dazu ausgebildet ist, von mindestens einem Teil des Gesichts der Person eine Aufnahme anzufertigen, wobei die Korrekturmittel dazu ausgebildet sind, die Aufnahme zu verändern und wobei das Anzeigemittel dazu ausgebildet ist, mindestens einen Teil der veränderten Aufnahme anzuzeigen, wobei die Korrekturmittel dazu ausgebildet sind, die Aufnahme derart zu verändern, dass die Blickrichtung der auf dem Anzeigemittel dargestellten Person derart dargestellt wird, dass die Person in das Aufnahmemittel, vorzugsweise auf das optische Zentrum des Aufnahmemittels blickt.

## Beschreibung

Die vorliegende Erfindung betrifft ein System zur Erfassung und Darstellung mindestens eines Teils eines Gesichts einer Person, wobei das System ein Aufnahmemittel, vorzugsweise mit einem optischen Zentrum, Korrekturmittel und ein Anzeigemittel umfasst, wobei das Aufnahmemittel dazu ausgebildet ist, von mindestens einem Teil des Gesichts der Person eine Aufnahme anzufertigen, wobei die Korrekturmittel dazu ausgebildet sind, die Aufnahme zu verändern und wobei das Anzeigemittel dazu ausgebildet ist, mindestens einen Teil der veränderten Aufnahme anzuzeigen.

Bei Systemen für Videokonferenzen nach dem Stand der Technik werden optische Aufnahmen des Sprechers üblicherweise ohne eine Korrektur der Aufnahmen, vor allem im Hinblick auf den Sprecher selbst, an die Anzeigemittel der anderen Teilnehmer übertragen und dort angezeigt.

Der Sprecher wird üblicherweise von einem Aufnahmemittel, beispielweise einer Kamera, aufgenommen, welches außerhalb eines Anzeigemittels, beispielsweise eines Displays, auf dem der Sprecher die anderen Teilnehmer der Videokonferenz und sonstige Inhalte betrachten kann, angebracht ist. Der Sprecher richtet seinen Blick üblicherweise auf die auf seinem Anzeigemittel dargestellten weiteren Teilnehmer und nicht auf bzw. in das Aufnahmemittel. Von den anderen Teilnehmern wird dies als fehlender Augenkontakt wahrgenommen, weil sich der Blick des Sprechers nicht in Aufnahmerichtung der Kamera richtet. Für die weiteren Teilnehmer erscheint es, als würde der Sprecher an ihnen vorbeischauen. Aufgrund des fehlenden wahrgenommenen Blickkontaktes wird eine kommunikative Verbindung zwischen der sprechenden Person und den Zuhörern auf der nonverbalen Ebene oftmals erschwert und Videokonferenzen leiden unter dem Makel eines nach wie vor als deutlich wahrgenommenen Unterschiedes zu einem persönlichen Treffen.

Durch die fortschreitende Digitalisierung und der damit verbundenen Häufung von Videokonferenzen sind Maßnahmen zur Verbesserung der nonverbalen Kommunikation erwünscht, um beispielsweise Fehlinterpretationen zu vermeiden, die bei einer Videokonferenz entstehen können, wenn sich Teilnehmer aufgrund eines fehlenden Augenkontaktes in die virtuelle Übertragung nicht entsprechend eingebunden fühlen.

Nach dem Stand der Technik ist es möglich, eine Perspektive digital zu korrigieren oder zu manipulieren. Damit können fehlerhafte Bildperspektiven berichtigt werden. Z.B. können optische Verzerrungen in Aufnahmen, die durch eine aufwärts oder abwärts geneigte Kamerahaltung entstanden sind, korrigiert werden. Vertikale Linien, die perspektivisch verzerrt aufgenommen wurden, können in einer Aufnahme wieder parallel zum vertikalen Rand der Aufnahme ausgerichtet werden. Ebenso können in der Horizontalen verzerrte Aufnahmen wieder waagrecht ausgerichtet werden. Beispielsweise kann auch der Winkel der Aufnahme, z.B. durch Drehen verändert werden. Es sind auch weitere Anpassungen der Perspektive denkbar, um beispielsweise eine Kameraneigung auszugleichen. Gemäß dem Stand der Technik lässt sich eine Aufnahme, wie ein Bild, auch in der Größe ändern, ohne dabei Pixelmaße zu verändern. Durch eine solche Skalierung können leere Bereiche entfernt werden, die beispielsweise durch eine perspektivische Korrektur entstanden sind.

Vor diesem Hintergrund liegt der vorliegenden Erfindung die Aufgabe zugrunde, ein System zur Erfassung und Darstellung von Personen, insbesondere im Hinblick auf die nonverbale Kommunikation zu verbessern.

Diese Aufgabe wird durch das System mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Korrekturmittel dazu ausgebildet sind, die Aufnahme derart zu verändern, dass die Blickrichtung der auf dem Anzeigemittel dargestellten Person derart dargestellt wird, dass die Person in das Aufnahmemittel, vorzugsweise auf das optische Zentrum des Aufnahmemittels blickt.

Das System kann ein Videokonferenzsystem sein.

Die Korrekturmittel können auch dazu ausgebildet sein, die Aufnahme derart zu verändern, dass einem Betrachter der Aufnahme auf dem Anzeigemittel der Eindruck vermittelt wird, dass die auf dem Anzeigemittel angezeigte Person Blickkontakt mit dem Betrachter herstellt oder herzustellen versucht.

In einer Videokonferenz blickt ein Teilnehmer aus der Erfahrung heraus auf die anderen Personen, die am Monitor dargestellt sind. Er blickt gewöhnlich nicht in eine außerhalb des Monitors angebrachte Kamera. Dieser Fehler wird vorzugsweise vom System korrigiert.

Es wird somit vorzugsweise ermöglicht, eine Aufnahme bzw. ein Bild einer Person bei einer Videokonferenz so zu übertragen, dass es bei einer weiteren Person an deren Bildschirm so erscheint, als würde die Person der weiteren Person in die Augen schauen. Dabei kann sich die weitere Person mittig versetzt vor dem Bildschirm befinden. Eine künstliche Nachführung der Augen bzw. des Gesichts der Person am Bildschirm der weiteren Person kann auch dann durchgeführt werden, wenn die weitere Person ihre Position verändert.

Ähnlich wie beim Ausrichten stürzender Linien wird vorzugsweise in automatisierter Form eine Perspektivenkorrektur der Aufnahme vorgenommen. Damit kann kompensiert werden, wenn eine Person nicht in die Kamera schaut, sondern beispielsweise in die Mitte ihres Bildschirms.

Die vorliegende Erfindung ermöglicht eine Verbesserung der subjektiven Wahrnehmung für über Kommunikationsnetze übertragene Dienste zur Kommunikation und Interaktion zwischen Menschen.

Ein Ziel der vorliegenden Erfindung liegt in einer Verbesserung der subjektiven Empfindung virtueller Anwendungen und damit in einer Steigerung der Akzeptanz digitaler Anwendungen.

Vorzugsweise ist vorgesehen, dass das Aufnahmemittel eine Kamera und/oder das Anzeigemittel ein Display jeweils eines Computers, eines Laptops, eines Smartphones, eines Tablets, eines Fernsehers und/oder eines sonstigen elektronischen Gerätes ist.

Kameras zum Aufnehmen optischer Signale sind bei vielen Geräten im Bildschirmrahmen integriert, also außerhalb des Displays angebracht, über das die optischen Signale ausgesandt werden. Dies betrifft beispielsweise Smartphones, Tablets, Laptops, Tischbildschirme oder Fernsehmonitore. Aufsteckbare Kameras werden in der Regel ebenso außerhalb des Displays angebracht.

Denkbar ist, dass die Korrekturmittel ferner dazu ausgebildet sind, Perspektivenkorrekturen in horizontaler und vertikaler Ebene auszuführen und/oder die Aufnahme derart zu verändern, dass kissen- oder tonnenförmige Verzeichnungen und/oder optische Verzerrungseffekte korrigiert werden.

Vorzugsweise ist vorgesehen, dass die Aufnahme ein Bild, ein Video oder ein Videostream der Person ist. Ein Videostream ist vorzugsweise die Anzeige der Person auf dem Anzeigemittel nahezu in Echtzeit.

In einer vorteilhaften Ausführungsform ist vorgesehen, dass das System mehr als ein Aufnahmemittel, das dazu ausgebildet ist von mindestens einem Teil des Gesichts der Person eine Aufnahme anzufertigen, umfasst.

Vorzugsweise ist vorgesehen, dass das System Auswahlmittel umfasst, die dazu ausgebildet sind ein Aufnahmemittel aus den Aufnahmemitteln auszuwählen, dessen Aufnahme verändert wird, wobei dasjenige Aufnahmemittel, welches im Vergleich zu den anderen Aufnahmemitteln den oder die geringsten räumlichen Abweichungswinkel zwischen der Blicklinie der Person und der Aufnahmelinie aufweist, ausgewählt wird.

Es kann vorzugsweise vorgesehen sein, dass eine Auswahl des Aufnahmemittels erfolgt, wenn die absolute Differenz eines oder der räumlichen Abweichungswinkel zwischen der Blicklinie der Person und der Aufnahmelinie des Aufnahmemittels und eines anderen Aufnahmemittels überschritten wird.

Denkbar ist, dass das Aufnahmemittel und das Anzeigemittel mindestens indirekt über Kommunikationsmittel zur Fernkommunikation, vorzugsweise über ein Mobilfunknetz nach dem 5G-Standard verbunden sind.

Die vorgeschlagene Erfindung adressiert vorzugsweise Verbesserungen für die Wahrnehmung über das Sinnesorgan Auge.

Die vorliegende Erfindung betrifft vorzugsweise Maßnahmen zur Verbesserung der nonverbalen Kommunikation und für eine verbesserte subjektive Bindung des Sprechers an die weiteren Teilnehmer bei einer Videokonferenz.

Die vorliegende Erfindung bezieht sich vorzugsweise auf das Gebiet der Kommunikationssysteme, insbesondere auf ein System und ein Verfahren für ein verbessertes subjektives Empfinden bei Anwendungen, die mehrere Sinnesorgane ansprechen. In vorteilhafter Weise wird durch die Erfindung eine technische Schwierigkeit, die in heutigen Kommunikationsnetzen eine subjektive Hürde für die Akzeptanz virtueller Zusammenkünfte mehrerer Personen darstellt, überwunden. Ausgehend von einer Verbesserung für die nonverbale Kommunikation bei Videokonferenzsystemen ist damit vorzugsweise auch die Grundlage für eine verbesserte Wahrnehmung zukünftiger taktiler Anwendungen mit ultrakurzen Latenzzeiten und ein verbessertes Eintauchen in Anwendungen der virtuellen Realität gegeben.

Die Erfindung betrifft auch ein Verfahren zur Erfassung und Darstellung mindestens eines Teils eines Gesichts einer Person mit einem erfindungsgemäßen System mit den folgenden Schritten:
a) Anfertigen einer Aufnahme von mindestens einem Teil des Gesichts der Person;
b) Korrektur der Aufnahme, so dass die Blickrichtung der auf dem Anzeigemittel dargestellten Person derart dargestellt wird, dass die Person in das Aufnahmemittel, vorzugsweise auf das optische Zentrum des Aufnahmemittels blickt;
c) Anzeigen der veränderten Aufnahme.

Es kann vorgesehen sein, dass die Aufnahme von mehreren Aufnahmemitteln angefertigt wird.

Denkbar ist, dass die Aufnahme von einem Aufnahmemittel angefertigt wird, welches im Vergleich zu einem oder mehreren anderen Aufnahmemitteln den geringsten räumlichen Abweichungswinkel zwischen der Blicklinie der Person und der Aufnahmelinie aufweist.

Denkbar ist ferner, dass eine Änderung des Aufnahmemittels zu einem anderen Aufnahmemittel erfolgt, wenn die absolute Differenz eines oder der räumlichen Abweichungswinkel zwischen der Blicklinie der Person und der Aufnahmelinie des Aufnahmemittels und eines anderen Aufnahmemittels überschritten wird.

Vorzugsweise ist vorgesehen, dass die Aufnahme der Person verändert wird, die spricht.

Es sind folgende weitere Verfahrensschritt denkbar, wobei die Schritte in einer beliebigen Reihenfolge und Kombination erfolgen können. Ebenso ist es denkbar, dass ein Schritt mehrmals durchlaufen wird.
1. Ermittlung der Position der Augen und des Blickwinkels der Person bzw. des Sprechers zur Kamera bei einer Videoübertragung mit mehreren Kameras und automatische Auswahl derjenigen Kamera für die Übertragung, in dessen Richtung der Blick des Sprechers gerichtet ist.
2. Automatisierte Durchführung einer Perspektivenkorrektur in horizontaler und vertikaler Ebene, damit im Falle eines nicht in eine Kamera gerichteten Blickes das Bild korrigiert werden kann und somit künstlich der Blickkontakt zu den weiteren Teilnehmern einer Videokonferenz hergestellt wird.
3. Identifikation und Auswahl der am besten geeigneten Kamera zur Korrektur der Perspektive und Übertragung des von dieser Kamera gefilmten und in der Perspektive korrigierten Bildes zu den weiteren Teilnehmern der Videokonferenz.
4. Integration einer Kamera in ein Display und Ablenkung der normalerweise an dieser Position zu emittierenden elektromagnetischen Wellen, damit der Betrachter ein durchgängiges Bild sieht, das nicht durch eine Kamera unterbrochen ist, verbunden mit dem Ziel, dass die aufnehmende Kamera physikalisch an der Position angebracht ist, in die der Sprecher der Videokonferenz blickt - die Bildschirmmitte, in der die anderen Teilnehmer dargestellt sind.
5. Nach künstlichem Herstellen des Blickkontaktes soll die Blickrichtung des entfernten Teilnehmers nachgeführt werden, wenn sich entweder der entfernte oder der lokale oder beide Teilnehmer bewegen, so dass der Blickkontakt aufrechterhalten bleibt.
6. Treffen einer Entscheidung, zu welcher Person im Falle mehrerer möglicher Personen der Blickkontakt künstlich hergestellt werden soll.

Die hierin beschriebenen Merkmale sind mutatis mutandis vorzugsweise Merkmale des Systems als auch des Verfahrens.

Die Erfindung betrifft auch ein Computerprogramm, welches Befehle umfasst, die bewirken, dass das erfindungsgemäße System die Verfahrensschritte eines erfindungsgemäßen Verfahrens ausführt.

Die Erfindung betrifft auch ein computerlesbares Medium, auf dem das erfindungsgemäße Computerprogramm gespeichert ist.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine schematische Darstellung eines Teils einer Ausführungsform eines erfindungsgemäßen Systems.
- Fig. 2:: eine schematische Darstellung eines Teils einer weiteren Ausführungsform eines erfindungsgemäßen Systems.
- Fig. 3:: ein vereinfachtes Ablaufdiagramm eines erfindungsgemäßen Verfahrens.
- Fig. 4:: eine schematische Darstellung einer Ausführungsform einer Vorrichtung zur Verbesserung der nonverbalen Kommunikation.

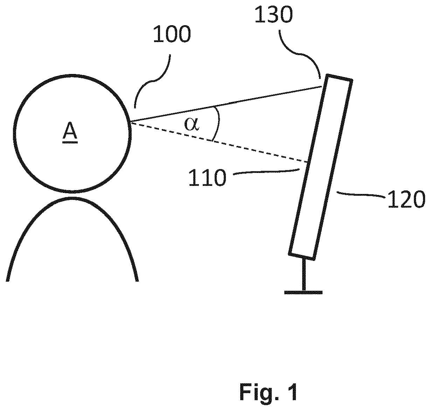

In Fig. 1 werden die geometrischen Grundlagen für eine Perspektivenkorrektur, also eine Korrektur der Blickrichtung, veranschaulicht. Das Auge 100 der Person A richtet den Blick auf die Mitte 110 des Bildschirms 120, auf dem bspw. andere Teilnehmer einer Videokonferenz dargestellt sind. Die Blickrichtung wird durch die gestrichelte Linie dargestellt. Die am oberen Rahmen des Bildschirms 120 angebrachte Kamera 130 filmt die Person A bzw. ein Auge der Person A unter einem Winkel α zu deren bzw. dessen Blickrichtung. Damit fallen die Blickrichtungen der Person A und der anderen Teilnehmer um einen Abweichungswinkel α auseinander. Die Blickrichtung der anderen Teilnehmer ist die Aufnahmerichtung der Kamera und die Blickrichtung der Person A ist auf die Mitte des Bildschirms 110 gerichtet, um die anderen Teilnehmer zu sehen. Es besteht damit kein Blickkontakt zwischen Person A und den weiteren Teilnehmern. An dieser Stelle ist zu erwähnen, dass selbstverständlich auch nur ein weiterer Teilnehmer an der Videokonferenz teilnehmen kann.

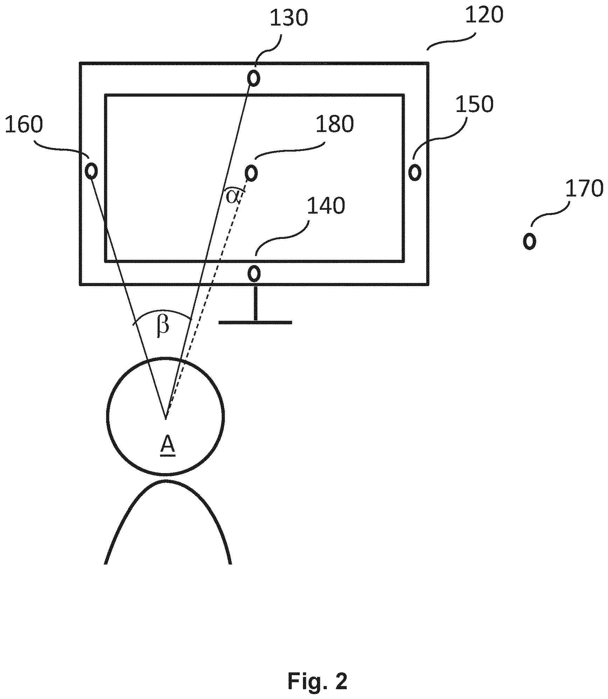

In Fig. 2 ist eine weitere Ausführungsform der Aufnahme- und Anzeigemittel von Person A dargestellt. Am Bildschirm 120 sind neben der Hauptkamera 130, welche im oberen Rahmenbereich des Bildschirms 120 angeordnet ist, weitere örtlich davon getrennte Kameras 140, 150, 160 und 170 angebracht, wobei die Kameras jeweils die Person A aufnehmen.

Kamera 140 befindet sich im unteren Rahmenbereich des Bildschirms 120. Die Kameras 150 und 160 befinden sich an den seitlichen Rändern des Bildschirms 120. Kamera 170 befindet sich außerhalb des Bildschirms 120.

Person A wird also nicht nur über eine Kamera, sondern gleichzeitig über mehrere, räumlich unterschiedlich platzierte Kameras aufgenommen.

Es ist nun denkbar, dass automatisiert die Aufnahme derjenigen Kamera an die anderen Teilnehmer übertragen wird, deren Abweichung des Winkels α zwischen Kamera und der Mitte des Displays, in das die gefilmte Person schaut, am geringsten ist.

Es kann in anderen Worten eine gedachte Blicklinie zwischen dem optischen Zentrum eines Auges der Person A und des Zentrums des Bildschirms 120 gezogen werden. Diese Blicklinie ist in Fig. 2 gestrichelt dargestellt. Wenn das Auge der Person A auf das Zentrum des Bildschirms 120 blickt, ist diese Blicklinie in der Blickrichtung des Auges.

Ebenso kann eine gedachte Kameralinie zwischen dem optischen Zentrum eines Auges der Person A und des optischen Zentrums einer Kamera gezogen werden. Für die Kameras 130 und 160 sind solche Kameralinien in Fig. 2 durchgehend dargestellt.

Wenn die Blicklinie und die Kameralinie auseinanderfallen, können Abweichungswinkel bezogen auf die Raumebenen ermittelt werden.

Vorzugsweise werden sowohl der vertikale Abweichungswinkel α, als auch der horizontale Abweichungswinkel β herangezogen und die Gesamtabweichung in der Ebene betrachtet.

Ändert Person A ihre Position, so ist denkbar, dass ein Umschalten des zu übertragenden Bildes auf eine besser geeignete Kamera durchgeführt wird, mit der die Abweichung zwischen Kameraachse bzw. Kameralinie und Blickrichtung bzw. Blicklinie geringer ist. Es wird also vorzugsweise die Aufnahme derjenigen Kamera übertragen, mit der die geringste Abweichung zwischen Blicklinie und Kameralinie besteht.

Diese Auswahl der Kamera kann automatisiert erfolgen.

Wenn die absolute Differenz der beiden vertikalen Abweichungswinkel einer ersten Kamera α₁ sowie einer zweiten Kamera α₂ einen Wert δ überschreitet, was sich vorzugsweise durch die Formel | α₁- α₂| > δ ausdrücken lässt und die absolute Differenz der beiden horizontalen Abweichungswinkel zwischen einer ersten Kamera β₁ sowie einer zweiten Kamera β₂ einen Wert ε überschreitet, was sich vorzugsweise durch die Formel | β₁ - β₂ | > ε ausdrücken lässt, kann eine Umschaltung erfolgen, so dass nicht mehr die Aufnahme der Kamera mit der größeren Abweichung sondern die Aufnahme der Kamera mit der kleineren Abweichung übertragen wird.

Der Abweichungswinkel αᵢ bezieht sich vorzugsweise auf die vertikale Abweichung und der Abweichungswinkel βi auf die horizontale Abweichung der Blickrichtung der gefilmten Person zur Bildschirmmitte von der sie filmenden Kameraachse.

Über trigonometrische Betrachtungen kann die Gesamtabweichung in der Ebene berechnet werden, wobei die Position der Augen über die aufzeichnende Kamera ermittelt wird.

Es kann vorzugsweise eine Perspektivenkorrektur für die Bildaufzeichnungen aller Kameras durchgeführt werden. Die Perspektivenkorrektur betrifft sowohl die horizontale als auch die vertikale Achse sowie Rotationen. Dadurch wird ermöglicht, dass die Darstellung der Person A an einem Anzeigemittel eines anderen Teilnehmers so erscheint, dass Augenkontakt zwischen beiden Personen besteht bzw. simuliert wird.

Bei Videokonferenzen mit mehr als zwei Teilnehmern kann der künstliche Blickkontakt der einzelnen Teilnehmer zu der jeweils sprechenden Person hergestellt werden. Die Erkennung der sprechenden Person erfolgt vorzugswese durch Analyse der akustischen Signale, wie beispielsweise Schalldruck am Mikrofon, also elektrische Spannung eines analogen Signals des Mikrofons bzw. Pegel eines digitalen Signals des Mikrofons sowie durch Analyse der optischen Signale, wie etwa Mundbewegungen der sprechenden Person. Es kann eine Nachbearbeitung dieser Daten erfolgen. Bevorzugt wird die Auswahl des Anzeigemittels, also der Kamera bzw. Kameras für die Ausführung der Perspektivenkorrektur am Ort, also beispielsweise in einem Computer, der Person A durchgeführt und zur Reduzierung der zu übertragenden Daten die am besten geeignete Variante ausgewählt. Dazu kann auch eine Superposition der Informationen aus den unterschiedlichen Kamerapositionen verwendet werden.

Die Perspektivenkorrektur beim Sprecher bzw. bei Person A bzw. beim Sender kann unter Zuhilfenahme des berechneten Winkels α in Fig. 1 ausgeführt werden oder unter geometrischen Betrachtungen, ähnlich der automatisierten Korrektur stürzender Linien bei bildbearbeitenden Programmen. Fig. 2 zeigt die Erweiterung des vertikalen Abweichungswinkels α durch Hinzunahme des horizontalen Abweichungswinkels β. Durch die Hinzunahme einer weiteren Dimension kann dies auch im dreidimensionalen Bereich erfolgen. Zur Vereinfachung der geometrischen Betrachtung wird als Ausgangspunkt die, vorzugsweise optische, Mitte des Auges oder der Augen angesetzt. Bekannte Bildbearbeitungsprogramme verfügen dazu über automatisierte Verfahren zur Erkennung der Augen.

Zudem können kissen- oder tonnenförmige Verzeichnungen vorzugsweise korrigiert werden, sowie optische Verzerrungseffekte aufgrund der häufig verwendeten Weitwinkelobjektive nachträglich ausgeglichen werden. Durch den Einsatz mehrerer Kameras wird zudem Video-Diversity erreicht, womit die Bildqualität erhöht werden kann. Die Aufnahmen der Kameras können auch in Kombination genutzt werden, um 3D- und Hologramm-Effekte zu generieren.

In einer weiteren Ausführungsform wird eine Kamera 180 in der Mitte des Displays oder einer anderen Position innerhalb des Bereichs des Displays angebracht, wie dies aus Fig. 2 ersichtlich ist. Damit wird erreicht, dass der gefilmte Teilnehmer seinen Blick bereits auf natürliche Weise in die Richtung ausgerichtet hat, in der die weiteren Teilnehmer einer Videokonferenz erwartet werden. Der Strahlengang der vom Display emittierten Lichtstrahlen kann dabei um die Kamera herum abgelenkt werden, so dass ein Betrachter vor dem Monitor ein durchgängiges Display sieht. Wird ein weiterer Teilnehmer am Bildschirm des sprechenden Teilnehmers A nicht in der Nähe der Position der Kamera 180 dargestellt, so kann die Darstellung des weiteren Teilnehmers am Bildschirm des Teilnehmers A in die Richtung der im Bildschirm integrierten Kamera verschoben werden, so dass der gesuchte Blickkontakt auch der Kamerarichtung entspricht.

Über bekannte Verfahren lassen sich die Position der Augen in einer Aufnahme bzw. einem Bild automatisiert erkennen. Damit liegen Informationen über die Position der Augen bei allen Teilnehmern einer Videokonferenz, die durch ein Aufnahmemittel, bspw. eine Kamera aufgenommen werden, vor. Somit sind in allen an der Videokonferenz beteiligten Endgeräte Informationen über die Position der Augen aller beteiligten Personen vorhanden. Damit können die Positionen der Augen jeweils nachgeführt werden. Dadurch lässt sich bei Bewegungen entweder der gefilmten Person oder der betrachtenden Person, der Blickkontakt aufrechterhalten.

Bei mehr als zwei Teilnehmern ist vorzugsweise eine Entscheidung zu treffen, welche Person angesehen wird. In einer bevorzugten Ausprägung ist dies der letzte Sprecher, also die Person, von der das letzte akustische Signal empfangen wurde.

Um die Menge der zu übertragenden Daten gering zu halten, kann die Perspektivenkorrektur am Ort des Aufnahmemittels durchgeführt werden. Denkbar ist also, dass in dem mit der Kamera verbundenen Computer, Tablet oder Smartphone oder über ein weiteres Gerät, das über einen Prozessor zur Verarbeitung von Daten verfügt, die Perspektivenkorrektur erfolgt.

In einer weiteren Ausprägung kann die Perspektivenkorrektur an einem zentralen Ort oder auf einem in einer Cloud verteilten Rechnersystem durchgeführt werden. Diese Ausprägung hat Vorteile, wenn eine mehrdimensionale Korrektur durchgeführt wird, die auch die Position und Blickrichtung der die gefilmte Person betrachtenden Personen hinzuzieht.

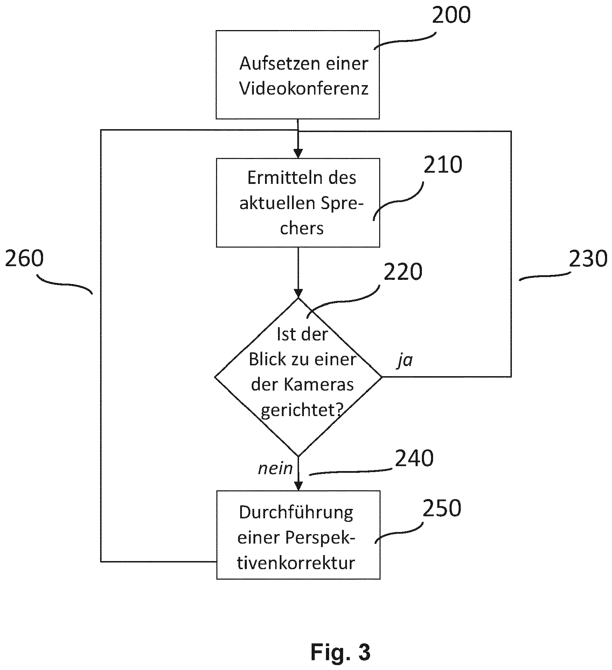

Fig. 3 zeigt ein mögliches Verfahren zur Korrektur der Perspektive. Nach dem Aufsetzen der Videokonferenz in Schritt 200 erfolgt in Schritt 210 die Ermittlung des aktuellen Sprechers. In Schritt 220 erfolgt die Abfrage, ob der Blick des Sprechers zu einer der Kameras gerichtet ist, also ob eine Sichtverbindung vorliegt. Ist dies gegeben, so erfolgt in der Schleife 230 erneut die Ermittlung des aktuellen Sprechers. Ist das Ergebnis der Abfrage 220 negativ 240, der Sprecher blickt also nicht in Richtung einer der Kameras, so erfolgt in Schritt 250 die Durchführung der Perspektivenkorrektur. Anschließend führt die Schleife 260 zurück zum Schritt 210 mit der Ermittlung des aktuellen Sprechers und der Überprüfung der Blickrichtung zu einer der Kameras in Schritt 220.

Es erfolgt vorzugsweise zunächst eine Auswahl der Kamera. Besteht Blickkontakt des Sprechers zu einer der vorhandenen Kameras, so kann diese Kamera für die Videoübertragung ausgewählt werden. Ändert der Sprecher seine Blickrichtung zu einer anderen Kamera, so kann für die Übertragung ein hartes Umschalten zu dieser zweiten Kamera erfolgen. Dies erfolgt in einem ersten Schritt.

In einem zweiten Schritt können Diversitätseffekte genutzt werden und aus verschiedenen Kameras ein Bild generiert werden, das dann übertragen wird. Dies ist der erste Schritt der Bildbearbeitung. Damit kann auch die Rauschunterdrückung verbessert werden.

In einem dritten Schritt kann die Perspektivenkorrektur durchgeführt werden, d.h. es erfolgt eine weitere Anwendung der Bildbearbeitung.

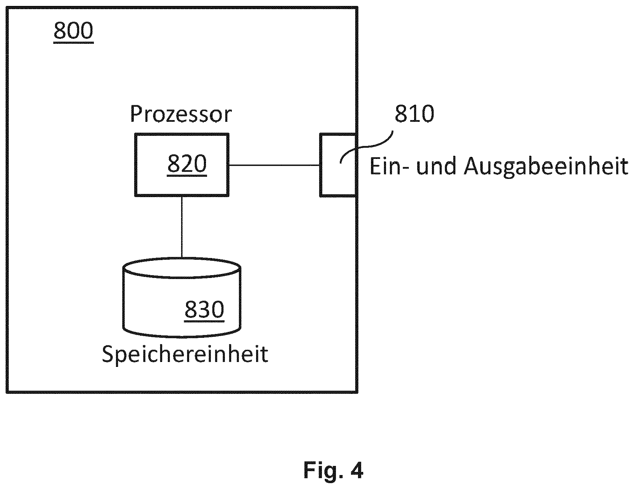

Die in Fig. 4 dargestellte Vorrichtung 800 zur Verbesserung der nonverbalen Kommunikation umfasst eine Ein- und Ausgabeeinheit 810 zum Einlesen der Daten und zur Ausgabe der verarbeiteten Daten, einen Prozessor 820 zum Verarbeiten der Daten, eine Speichereinheit 830 und eine Software zum Ausführen des Programms. Die Hardware-Komponenten sind über ein Bussystem miteinander verbunden. Diese Vorrichtung kann in einer separaten Hardware-Einheit bereitgestellt werden oder als Bestandteil bestehender Kommunikationssysteme realisiert werden und ist damit für den Einsatz in Kommunikationsmitteln wie Personal Computern (PC), Mobilfunk-Endgeräte, insbesondere Smartphones und Tablets, sowie Virtual-Reality-Plattformen vorgesehen. Dies betrifft vorzugsweise Kommunikationsmittel, in denen Kameras, Mikrofone und Mittel zur taktilen Kommunikation zum Einsatz kommen.

Neben der verbesserten optischen Darstellung kann durch das stärkere Einbinden der beteiligten Personen aufgrund des simulierten Blickkontakts das subjektive Eintauchen in diese virtuelle Situation verbessert werden. Damit kann eine höhere Akzeptanz von Videokonferenzen und zukünftigen taktilen Anwendungen erreicht werden.

Das künstliche Herstellen eines Blickkontakts kann Fehlinterpretationen der Aussagen des Sprechers durch den Zuhörer vermeiden. Das gilt auch für den Fall, dass ein Sprecher in einer Videokonferenz Informationen von seinem eigenen Bildschirm oder von außerhalb des Bildschirms abliest. Aufgrund der hierin beschriebenen Korrekturmaßnahmen kann durch Erzielen des Blickkontaktes eine engere Bindung zu den Zuhörern erreicht und die nonverbale Kommunikation gestützt werden.

Ein Ziel ist es somit, den virtuellen Konferenzen den Durchbruch zur vollständigen Akzeptanz zu verhelfen und den Weg für die Akzeptanz weiterer virtueller Anwendungen zu bereiten. Die vorliegende Erfindung soll dazu beitragen, die Realitätsnähe zu erhöhen, um die digitale zwischenmenschliche Kommunikation zu verbessern.

## Patentansprüche

1. System zur Erfassung und Darstellung mindestens eines Teils eines Gesichts einer Person, wobei das System ein Aufnahmemittel, vorzugsweise mit einem optischen Zentrum, Korrekturmittel und ein Anzeigemittel umfasst, wobei das Aufnahmemittel dazu ausgebildet ist, von mindestens einem Teil des Gesichts der Person eine Aufnahme anzufertigen, wobei die Korrekturmittel dazu ausgebildet sind, die Aufnahme zu verändern und wobei das Anzeigemittel dazu ausgebildet ist, mindestens einen Teil der veränderten Aufnahme anzuzeigen, **dadurch gekennzeichnet, dass** die Korrekturmittel dazu ausgebildet sind, die Aufnahme derart zu verändern, dass die Blickrichtung der auf dem Anzeigemittel dargestellten Person derart dargestellt wird, dass die Person in das Aufnahmemittel, vorzugsweise auf das optische Zentrum des Aufnahmemittels blickt.

2. System nach Anspruch 1, **dadurch gekennzeichnet, dass** das Aufnahmemittel eine Kamera und/oder das Anzeigemittel ein Display jeweils eines Computers, eines Laptops, eines Smartphones, eines Tablets, eines Fernsehers und/oder eines sonstigen elektronischen Gerätes ist.

3. System nach Anspruch 1 oder 2, **dadurch gekennzeichnet, dass** die Korrekturmittel ferner dazu ausgebildet sind, Perspektivenkorrekturen in horizontaler und vertikaler Ebene auszuführen und/oder die Aufnahme derart zu verändern, dass kissen- oder tonnenförmige Verzeichnungen und/oder optische Verzerrungseffekte korrigiert werden.

4. System nach einem der vorhergehenden Ansprüche, **dadurch gekennzeichnet, dass** die Aufnahme ein Bild, ein Video oder ein Videostream der Person ist.

5. System nach einem der vorhergehenden Ansprüche, **dadurch gekennzeichnet, dass** das System mehr als ein Aufnahmemittel, das dazu ausgebildet ist von mindestens einem Teil des Gesichts der Person eine Aufnahme anzufertigen, umfasst.

6. System nach Anspruch 5, **dadurch gekennzeichnet, dass** das System Auswahlmittel umfasst, die dazu ausgebildet sind, ein Aufnahmemittel aus den Aufnahmemitteln auszuwählen, dessen Aufnahme durch das Korrekturmittel verändert wird, wobei dasjenige Aufnahmemittel, welches im Vergleich zu den anderen Aufnahmemitteln den oder die geringsten räumlichen Abweichungswinkel zwischen der Blicklinie der Person und der Aufnahmelinie aufweist, ausgewählt wird.

7. System nach Anspruch 5 oder 6, **dadurch gekennzeichnet, dass** eine Auswahl des Aufnahmemittels erfolgt, wenn die absolute Differenz eines oder der räumlichen Abweichungswinkel zwischen der Blicklinie der Person und der Aufnahmelinie des Aufnahmemittels und eines anderen Aufnahmemittels überschritten wird.

8. System nach einem der vorhergehenden Ansprüche, **dadurch gekennzeichnet, dass** das Aufnahmemittel und das Anzeigemittel mindestens indirekt über Kommunikationsmittel zur Fernkommunikation, vorzugsweise über ein Mobilfunknetz nach dem 5G-Standard verbunden sind.

9. Verfahren zur Erfassung und Darstellung mindestens eines Teils eines Gesichts einer Person mit einem System nach einem der vorhergehenden Ansprüche mit den folgenden Schritten:
a) Anfertigen einer Aufnahme von mindestens einem Teil des Gesichts der Person;
b) Korrektur der Aufnahme, so dass die Blickrichtung der auf dem Anzeigemittel dargestellten Person derart dargestellt wird, dass die Person in das Aufnahmemittel, vorzugsweise auf das optische Zentrum des Aufnahmemittels blickt;
c) Anzeigen der veränderten Aufnahme.

10. Verfahren nach Anspruch 9, **dadurch gekennzeichnet, dass** die Aufnahme von mehreren Aufnahmemitteln angefertigt wird.

11. Verfahren nach Anspruch 10 **dadurch gekennzeichnet, dass** die Aufnahme von einem Aufnahmemittel angefertigt wird, welches im Vergleich zu einem oder mehreren anderen Aufnahmemitteln den geringsten räumlichen Abweichungswinkel zwischen der Blicklinie der Person und der Aufnahmelinie aufweist.

12. Verfahren nach Anspruch 10 oder 11, **dadurch gekennzeichnet, dass** eine Änderung des Aufnahmemittels zu einem anderen Aufnahmemittel erfolgt, wenn die absolute Differenz eines oder der räumlichen Abweichungswinkel zwischen der Blicklinie der Person und der Aufnahmelinie des Aufnahmemittels und eines anderen Aufnahmemittels überschritten wird.

13. Verfahren nach einem der Ansprüche 9 bis 12, **dadurch gekennzeichnet, dass** die Aufnahme der Person verändert wird, die spricht.

14. Computerprogramm, welches Befehle umfasst, die bewirken, dass das System eines der Ansprüche 1 bis 8 die Verfahrensschritte eines der Ansprüche 9 bis 13 ausführt.

15. Computerlesbares Medium, auf dem das Computerprogramm nach Anspruch 14 gespeichert ist.
